# EUROPÄISCHE PATENTSCHRIFT

(11) **EP 1 155 088 B1**
(45) Veröffentlichungstag und Bekanntmachung des Hinweises auf die Patenterteilung: **18.02.2004**
(21) Anmeldenummer: 99964518.7
(22) Anmeldetag: 03.12.1999
(51) Int. Cl.: C08L 101/00, C09D 201/00, C09D 5/03

(54) **HÄRTBARE MASSE UND VERFAHREN ZU IHRER HERSTELLUNG UND VERARBEITUNG**
HARDENABLE MATERIAL AND METHOD FOR THE PRODUCTION AND PROCESSING THEREOF
MATIERE DURCISSABLE ET SON PROCEDE DE PRODUCTION ET DE TRAITEMENT

(30) Priorität: 10.12.1998 DE 19856877
(43) Veröffentlichungstag der Anmeldung: 21.11.2001
(73) Patentinhaber: Institut für Polymerforschung Dresden e.V., 01069 Dresden (DE)
(72) Erfinder: GEDAN-SMOLKA, Michaela, D-01990 Ortrand (DE); LEHMANN, Dieter, D-01646 Coswig (DE); MEIER-HAACK, Jochen, D-01259 Dresden (DE)
(74) Vertreter: Rauschenbach, Marion, Dipl.-Ing.
(86) Internationale Anmeldenummer: PCT/EP1999/009464
(87) Internationale Veröffentlichungsnummer: WO 2000/034391

(56) Entgegenhaltungen:
- EP-A- 0 256 162
- EP-A- 0 504 732
- WO-A-93/04122
- DE-A- 3 545 061
- GB-A- 2 312 897
- US-A- 5 120 810

## Beschreibung

Die Erfindung bezieht sich auf das Gebiet der Chemie und betrifft härtbare Massen, wie sie beispielsweise für die Herstellung von Lacken eingesetzt werden können und ein Verfahren zu ihrer Herstellung und Verarbeitung.

Die bisher bekannten einstufigen thermisch härtenden Vernetzungssysteme sind durch folgende Probleme gekennzeichnet: Es werden hoch reaktive, bei Temperaturen vorzugsweise unter 150°C aushärtende Massen gewünscht. Bei diesen hochreaktiven Systemen treten jedoch Vorreaktionen schon während der Konfektionierung der Massen im Extruder auf, die eine reproduzierbare Ausbildung einer einheitlichen Schmelze oder eines einheitlichen Filmes besonders in Formen oder auf Substraten unterschiedlicher Wärmekapazität behindern, was dann zu Inhomogenitäten der ausgehärteten Masse und damit Qualitätsunterschieden führt. Um bei solchen Systemen akzeptable Produktqualitäten zu erreichen ist außerdem ein relativ niedriges Level für den Bereich der Erweichungstemperaturen erforderlich, was sich negativ auf die Lagerstabilität auswirkt. Besonders bei den hochreaktiven Systemen beeinträchtigt zudem die komplexe Überlagerung des Erweichungs-, Fließ- und Filmbildungsprozesses mit der Härtungs- und Vernetzungsreaktion eine reproduzierbare Endqualität der ausgehärteten Masse, was besonders bei Pulverlacken die Entstehung qualitativ hochwertiger Lackschichten verhindert.

In der EP 0 045 040 ist ein kombiniertes Reaktionssystem für Pulverlacke angegeben. Hier werden ein epoxyfunktionalisiertes Acrylatcopolymer mit einem carboxyfunktionalisiertem Acrylatcopolymer und einem zweiten Vernetzer, der entweder mit Hydroxyl- oder mit Carboxylgruppen reagieren kann, kombiniert. Die Härtung mit Hydroxylgruppen ist dabei bevorzugt. Als zweiter Härter werden entweder extern blockierte Isocyanate, Melamin-Formaldehydharze oder alkylierte Glycolurilharze für die Reaktion mit den Hydroxylgruppen vorgeschlagen.
In den Beispielen wird eine dreistufige Härtung bei verschiedenen Temperaturen und Zeiten bevorzugt. In der Beschreibung und den Beispielen wird auch der Einsatz von Katalysatoren zur Absenkung der Härtungszeit eingeschlossen. Für Isocyanatsysteme werden dabei Zinnkatalysatoren eingesetzt, die bekanntlich die Reaktion zwischen NCO- und OH-Gruppen beschleunigen, aber keine Absenkung der Deblockierungstemperatur des blockierten Isocyanates und damit auch keine Absenkung der Reaktionstemperatur für die vollständige Aushärtung des Systems bewirken. Für Systeme mit alkylierten Melaminformaldehyd- oder Glycolurilharzen werden starke Säuren, die bevorzugt mit Epoxiden oder Aminen blockiert sind, vorgeschlagen. Bei diesen Katalysatoren handelt es um Substanzen, die nur die Teilreaktion Epoxid/OH-Gruppen beeinflussen. Die Katalysatormenge beträgt max. 2 Gew.-% des Lacksystemes.

In US 4,346,144 ist ein kombinierter, thermisch härtender Pulverlack, bestehend aus einem epoxyfunktionalisierten Acrylatcopolymer und zwei Vernetzern beschrieben. Als Vernetzer werden dabei einerseits aliphatische Dicarbonsäuren und andererseits Vernetzer, die über funktionelle Gruppen verfügen, die mit Hydroxyl- oder Carboxylgruppen reagieren können, eingesetzt, wobei die Reaktion mit Hydroxylgruppen bevorzugt ist. Für die Reaktion mit Hydroxylgruppen werden extern blockierte Isocyanate, alkylierte Melamin-Formaldehydharze oder -Glykolurilharze verwendet, während für die Reaktion mit Carboxylgruppen andere Epoxidvernetzer, di- oder trisubstituierte Oxazoline oder β-Hydroxyalkylamine eingesetzt werden. Das Pulverlacksystem kann darüber hinaus Zinnkatalysatoren für blockierte Isocyanatsysteme und starke Säuren, wie ρ-Toluensulfonsäure, für Systeme mit Melamin-Formaldehydharzen oder Glykolurilharzen enthalten. Der Einbrennprozess wird dreistufig bei Temperaturen von 121 °C/10', 149 °C/10'und 177 °C/30' durchgeführt. Dabei erfolgt bei 121 °C nur die Filmbildung ohne chemische Reaktionen, bei 149 °C die Reaktion Epoxid/Carboxylgruppen und bei 177 °c die vollständige Vernetzung des Lackfilmes.

Wie schon in der EP 045 040 angegeben ist, beeinflussen die verwendeten Katalysatoren nur eine der ablaufenden Teilreaktionen und ermöglichen zudem keine Absenkung der Einbrenntemperaturen der vollständigen Vernetzung auf Temperaturen ≤ 150 °C.

Ein auf denselben funktionellen Gruppen basierendes mehrfach vernetzendes System wurde von Takeda et al. in Farbe+Lack, 5(1989)313, ebenfalls für Pulverlacke beschrieben. Hier wird ein Polyester (funktionalisiert mit Carboxyl- und Hydroxylgruppen) mit Acrylatharzen (funktionalisiert mit Glycidyl- und Hydroxylgruppen) und extern blockiertem Isocyanat als Härtern kombiniert. Auf diese Weise konnten verbesserte Filmeigenschaften durch Steuerung der Aushärtungsrate erhalten werden. Die Aushärtung erfolgt bei Temperaturen zwischen 140 °C und 200 °C. Untersuchungen von Takeda et al. zum Reaktionsmechanismus zeigten, daß zuerst die Carboxylgruppen des Polyesters mit den Glycidylgruppen des Acrylates unter gleichzeitiger Dissoziation des blockierten Isocyanates reagieren. Danach folgen Reaktionen zwischen den Hydroxylgruppen des Polyesters oder Acrylates mit den freien NCO-Gruppen. Für letztere Teilreaktion wird in einer Standardformulierung Dibutylzinndilaurat (DBTDL) (0,15 Gew.-%) als Katalysator eingesetzt. Das mehrfachvernetzende Lacksystem weist im Vergleich zu den einstufigen Systemen neben der Steuerung der Durchhärtungsrate noch weitere Vorteile auf: Im Vergleich zum Acrylat/Polyester-System wird eine verbesserte Pigmentbenetzung und gute Lagerstabilität und zum Polyester/Isocyanat-System eine verringerte Abgabe flüchtiger Bestandteile während der Einbrennphase bei vergleichbarer Wetterechtheit erreicht.
Aus Umweitschutzgründen ist es von Vorteil Substanzen einzusetzen, die völlig frei von Emissionen sind, seien es Lösungsmittel oder Abspalter in Form von Blockierungsmitteln.
Ein vergleichsweise bei niedrigen Temperaturen (120 - 150°C) härtendes kombiniertes Pulverlacksystem ist in EP 652 263 beschrieben. Bei diesem Pulverlacksystem wird ein Acrylatcopolymer (epoxyfunktionalisiert) mit aliphatischen Dicarbonsäuren oder Anhydriden und einem Uretdionaddukt als Härterkomponenten kombiniert. Als Katalysatoren kommen Substanzen zum Einsatz, die in der Literatur als Katalysatoren für Reaktionen der Isocyanatfunktion z.B. mit Alkoholen, Aminen oder Anhydriden beschrieben sind, wie z.B. Zinnverbindungen (Zinnoctanoat, Dibutylzinndilaurat, 1,4-Diazabicyclo(2,2,2)octan) und gegebenenfalls Katalysatorgemische (Kunststoffhandbuch, Band VII, S. 104 - 110, 1993).
Katalysatoren kommen, falls überhaupt, in Anteilen von 0,1 - 5 Gew.-% vorzugsweise 0,1 - 3 Gew.-% bezogen auf die Summe der Binder und Härterkomponenten zum Einsatz. Die Härtung in den Beispielen erfolgt einstufig bezogen auf die Reaktionstemperatur. Die Einbrennbedingungen betragen 30 min bei 140 °C oder 150 °C.

Ein weiteres kombiniertes Pulverlacksystem ist in der EP 702 064 beschrieben. Hier reagieren ein Polyester (carboxylfunktionalisiert) und ein reaktives Acrylatharz (hydroxyl- oder carboxylfunktionalisiert) mit glycidylfunktionalisiertem Härter 1 und extern blockiertem Isocyanathärter 2 simultan bei 170 - 180 °C zu glänzenden Oberflächen. Die Benutzung von Katalysatoren wurde in der Beschreibung erwähnt, aber weder in Beispielen noch in Ansprüchen näher ausgeführt.

Ein epoxidfreies kombiniertes Beschichtungssystem ist in der EP 698 629 vorgestellt worden. Es besteht aus einem Polyester (hydroxylterminiert) als Binderkomponente, einem blockierten carboxylgruppenhaltigen Isocyanat und einem β-Hydroxyalkyiamid als Vernetzer und wird zwischen 150 und 220 °C zu matten Oberflächen ausgehärtet. Die Verwendung von Katalysatoren wurde nur in der Beschreibung (z.B. DBTL) erwähnt. Es handelt sich dabei ebenfalls um einen Katalysator, der die Reaktion zwischen NCO- und OH-Gruppen beschleunigt und keine Absenkung der Deblockierungstemperatur für das blockierte Isocyanat und damit auch keine Absenkung der Aushärtungstemperatur ermöglicht.

Ein Reaktionssystem aus carboxyfunktionellem Polyester, phenolischem und epoxyfunktionellem Härter bzw. einem Bindergemisch aus carboxyfunktionellem Polyester und einem Polyester mit phenolischen OH-Gruppen mit einem epoxyfunktionellen Härter ist Grundlage für ein weiteres kombiniertes Reaktionssystem, bei dem über ein stufenweises isothermes Aufheizregime eine technologische Trennung der Prozesse Filmbildung und Härtung und Vernetzung möglich ist (Farbe+Lack 11(1997)48). Katalysatoren wurden für diese kombinierten Reaktionssysteme nicht eingesetzt. Die Aushärtung erfolgt in zwei Temperaturstufen, wobei die vollständige Vernetzung erst bei Temperaturen > 160°C realisierbar ist.

Die DE 21 47 653 beschreibt spezielle Lackpulver zur Erzeugung mattierter Oberflächen. Diese Pulver sind dadurch gekennzeichnet, daß sie aus wenigstens zwei mechanisch gemischten Ausgangs-Lackpulvern unterschiedlicher Schmelzbereiche bestehen, die von unterschiedlich reaktiven Harz-Härter-Systemen gebildet sind. Diese Technik hat sich jedoch als teuer und wegen auftretender Entmischungserscheinungen als wenig reproduzierbar erwiesen.

In DE 23 24 696 ist ein Verfahren zur reproduzierbaren Herstellung matter Überzüge auf der Basis von Pulverbeschichtungen aus 1,2-Epoxidverbindungen und Salzen von mehrbasigen Polycarbonsäuren mit cyclischen Amidinen als Härter beschrieben. Bei der Herstellung der Salze wird pro Mol Carboxylgruppe maximal 1 Mol Amidin berechnet. Die erfindungsgemäß eingesetzten Imidazolinsalze wirken im Reaktionssystem sowohl als Beschleuniger als auch als Härter. Die Vernetzung erfolgt einstufig bei Temperaturen ≥180°C. Durch unterschiedliche Reaktivität der reaktiven Gruppen bilden sich an der Oberfläche Mikrostrukturen, die eine matte Oberfläche aufweisen.

Nach der WO 93/04122 ist eine Polyesterzusammensetzung für Pulverlackanwendungen bekannt, die aus einem Carboxylgruppen enthaltenden Polyester und aus einem Phosphoniumkatalysator besteht, der die Reaktion zwischen dem Polyester und einem Polyepoxid katalysiert. In diesem Polyester sind neben den Carboxylgruppen synthesebedingt außerdem freie OH-Gruppen enthalten, die prinzipiell als reaktive Gruppen für eine Reaktion mit Epoxiden in Frage kommen. Allerdings ist die Reaktivität dieser aliphatischen oder cycloaliphatischen OH-Gruppen unkatalysiert bzw. in Gegenwart von quarternären Phosphonium- oder Ammoniumkatalysatoren bei Temperaturen ≤ 200°C so gering, dass eine Reaktion zwischen diesen OH-Gruppen und den Epoxidgruppen praktisch nicht abläuft. Damit handelt es sich bei der vorgeschlagenen Reaktionsmischung um ein klassisches Einstufenreaktionssystem, dessen Vernetzung auf selektiven Reaktionen zwischen Epoxy- und Carboxylgruppen beruht

Die Nachteile der bisherigen thermisch härtbaren Massen liegen darin, daß bei Systemen mit niedrigen Härtungstemperaturen, die bisher nur als einstufig härtbare Massen bekannt sind, eine komplexe Überlagerung der Einzelprozesse Filmbildung und Vernetzung während des Aushärtungsprozesses gegeben ist, die zu qualitativ schlechten Oberflächen führen kann. Bei den bekannten zwei- oder mehrstufig thermisch härtbaren Systemen liegen die Aushärtungstemperaturen der zweiten Stufe so hoch, daß die Anwendbarkeit dieser Systeme deutlich eingeschränkt ist.

Die Aufgabe der Erfindung besteht darin, härtbare Massen und ein Verfahren zu ihrer Herstellung und Verarbeitung anzugeben, bei denen für möglichst alle Verfahrensstufen bei der Herstellung und Verarbeitung der härtbaren Massen ein großes und reproduzierbares Verfahrensfenster und eine möglichst niedrige Einbrenn- oder Aushärtungstemperatur realisiert werden soll.

Die Aufgabe wird durch die in den Ansprüchen **1, 19 und 35** angegebene Erfindung gelöst, bei der durch Kombination bekannter Vernetzungsreaktionen und Einsatz von Katalysatoren die Herstellung hochreaktiver härtbarer Massen realisierbar ist, in denen die Teilreaktionen in technologisch getrennten Reaktionsstufen ablaufen. Weiterbildungen sind Gegenstand der Unteransprüche.

Durch die erfindungsgemäße Lösung werden an sich bekannte Vernetzungsreaktionen derart kombiniert, daß Teilreaktionen in verschiedenen Geschwindigkeiten bei Temperaturen bevorzugt von ≤ 150 °C ablaufen und dadurch technologisch getrennte Reaktionsstufen möglich werden. In der ersten Reaktionsstufe laufen die Prozesse Überführung in den schmelzflüssigen Zustand, bei Lacken und Polymeraufbaureaktionen in der Filmbildung, nach im wesentlichen einer thermisch initiierten Teilreaktion parallel ab und in eine unmittelbar folgende oder auch später durchführbare zweite Reaktionsstufe erfolgt die vollständige Vernetzung nach einer zweiten (thermisch oder strahlenchemisch initiierten) Teilreaktion. Bei Lacken ist die Überführung in den schmelzflüssigen Zustand mit der Filmbildung gleichzusetzen.
Überraschenderweise konnte durch den gezielten Einsatz von Katalysatoren und/oder Katalysatorgemischen in den erfindungsgemäßen Zwei- oder Mehrstufenreaktionssystemen eine Trennung technologisch komplexer Prozeßabläufe erreicht werden. Dabei erfolgt in einem ersten Verfahrensschritt die Homogenisierung der erfindungsgemäßen Massen in Schmelze und/oder in Lösung. Bei dieser Homogenisierung darf (dürfen) im wesentlichen noch keine Polymeraufbau- und/oder Verzweigungsreaktion(en) stattfinden.
Die Verarbeitung der erfindungsgemäßen Massen erfolgt danach in zwei oder mehreren Stufen. Die erfindungsgemäßen Massen werden einer Temperaturerhöhung ausgesetzt. Dabei finden parallel zum Übergang in die (schmetz-)flüssige Phase (Filmbildung) zuerst Polymeraufbau- und/oder ― verzweigungsreaktionen statt, und zeitlich später oder nach weiterer Temperaturerhöhung erfolgen die Härtungs- und Vernetzungsreaktionen, wobei damit gleichzeitig eine Absenkung der Einbrenn- oder Aushärtungstemperaturen auf Werte vorzugsweise ≤ 150°C erreicht wird.
Im Vergleich zu unkatalysierten Reaktionen wird durch den gezielten Einsatz von Katalysatoren oder Katalysatorgemischen bekannter Additionskatalysatoren eine definierte Absenkung der Reaktionstemperatur und/oder Reaktionszeit (bei einer definierten Temperatur) realisiert, ohne dass sich die Teilreaktionen dadurch vollständig überlagern. Neben der Reaktivität der funktionellen Gruppen sind die Binder- und Härterkomponenten nach ihren Eigenschaften bezüglich Struktur, Molmasse und Schmelzeviskosität für die Realisierung der technologischen Trennung der Teilreaktionen auszuwählen. Auf diese Weise lassen sich auch definierte Oberflächeneigenschaften, wie Strukturen, Glanz- und Mattgrade, einstellen.

Die Reaktionssysteme enthalten bevorzugt Substanzen mit Epoxidgruppen/Hydroxylgruppen (bevorzugt aromatisch)/Carboxylgruppen (Reaktionssystem 1: Komponenten A und B **oder B** und jeweils C und D und gegebenenfalls E) oder Epoxidgruppen/Carboxylgruppen und/oder Hydroxytgruppen/intern oder extern blockierte Isocyanatgruppen (Reaktionssystem 2: Komponenten A und B **oder B** und jeweils C und D und gegebenenfalls E). Ausgenommen davon sind Komponenten A und/oder B aus mindestens einem Epoxid- und gegebenenfalls Hydroxylgruppen aufweisenden Copolymerisat olefinisch ungesättigter Monomere. Ebenfalls ausgenommen sind härtbare Massen, die nur eine mit mindestens zwei gleichen reaktiven Gruppen funktionalisierte Polymersubstanz und nur einen funktionalisierten niedermolekularen und/oder oligomeren Härter mit mindestens zwei reaktiven funktionellen Gruppen und Katalysator(en) für Additionsreaktionen enthalten.
Die Zusammensetzung der reaktiven Komponenten A,B,C und besonders hinsichtlich ihres Verhältnisses ihrer reaktiven Gruppen ist entsprechend dem Einsatzzweck auszuwählen. Dabei wird ein äquimolares Verhältnis der reaktiven Gruppen eingesetzt.
Über die Variation der Anteile der Teilreaktionen 1 und 2 im Reaktionssystem lassen sich zusätzlich die Anfangsviskosität oder die Viskosität nach der ersten Teilreaktion einstellen. Dadurch kann insbesondere bei Lacken die Qualität der Filmbildung beeinflusst werden.
Des weiteren kann mit der Zweistufenhärtung eine gezielte Teilhärtung mit Abbruch der Reaktion nach der ersten Teilreaktion erfolgen. Die zweite Teilreaktion und vollständige Vernetzung kann dann zu einem späteren Zeitpunkt oder nach Aufbringen einer weiteren Schicht oder Masse erfolgen.

Die erfindungsgemäßen Reaktionssysteme eignen sich besonders für Reaktionskombinationen, deren Reaktionsgemische in Schmelze extrudiert und homogenisiert und/oder in Lösung homogenisiert werden, im zerkleinerten Zustand (pelletiert und/oder pulverisiert) oder in flüssiger Masse über eine ausreichend hohe Lagerstabilität verfügen und bei Temperaturen von vorzugsweise ≤ 150°C vollständig ausgehärtet werden können.
Die Homogenisierung der einzelnen Massebestandteile erfolgt vorzugsweise durch Mischen der Komponenten in Schmelze in einem Laborkneter, Co-Kneter oder Extruder. Temperatur und/oder Mischzeit und/oder Drehzahl werden so eingestellt, daß während der Homogenisierung im wesentlichen noch keine Verzweigungs- oder Polymeraufbaureaktionen stattfinden. Im Laborkneter erfolgt beispielsweise zunächst ein Aufschmelzen und die Homogenisierung der Komponenten A und B **oder B.** Danach erfolgt schrittweise die Zugabe der Komponenten C und E. Zuletzt erfolgt die Dosierung des Katalysators und/oder Katalysatorgemisches D, vorzugsweise als Batch. Vorteilhafterweise kann die Massetemperatur vor Zugabe des Katalysators oder Katalysatorgemisches abgesenkt werden. Für die Homogenisierung in einem Co-Kneter oder im Extruder werden beispielsweise alle Komponenten gründlich gemischt und anschließend im Co-Kneter oder Extruder homogenisiert. Die Homogenisierung der Komponenten erfolgt bei Massetemperaturen zwischen 50 und 130°C bevorzugt zwischen 70 und 100°C und dauert zwischen 1 min und längstens 15 min. Zur Erzielung optimaler Durchmischung kann im Co-Kneter oder im Extruder eine zweimalige Extrusion vorteilhaft sein, wobei die Komponente D gegebenenfalls im zweiten Extrusionsschritt zugegeben werden kann. Dieser zweite Extrusionsschritt kann dann vorteilhafterweise bei tieferen Massetemperaturen durchgeführt werden. Die homogenisierte Masse wird nachfolgend durch schnelles Abkühlen zum Erstarren gebracht. Dies erfolgt durch Aufbringen der Schmelze auf ein Kühlband oder Einbringen in flüssigen Stickstoff. Die erstarrte Masse wird gebrochen und zerkleinert oder bei Pulverlacken anschließend mit einer Sichtermühle zu Pulver mit einer Teilchengröße < 90 µm vermahlen.

Die Homogenisierung der Komponenten kann auch in Lösung erfolgen. Die Homogenisierungstemperatur liegt dabei oberhalb Raumtemperatur und übersteigt im wesentlichen nicht 110°C. Vorteilhafterweise liegt hier mindestens eine der Komponenten (A-E), bevorzugt A und B **oder B** und C, in flüssiger Form vor, in der mindestens eine der anderen Komponenten löslich ist. Die homogenisierte Masse wird nachfolgend schnell abgekühlt und kann danach bis zur Verarbeitung gelagert werden.
Die Homogenisierung kann weiterhin auch in einem externen Lösungsmittel erfolgen, das nach der Homogenisierung durch schonende Destillation im Vakuum oder durch Ausfällen in ein Nichtlösungsmittel für alle Komponenten A-E entfernt wird.
In der ersten Verarbeitungsstufe der homogenisierten Masse erfolgt vorzugsweise bei Temperaturen größer als Mischungstemperatur die Überführung in den (schmelz-) flüssigen Zustand parallel mit ersten Teilreaktionen zur Einstellung der Schmelzeviskosität.
Bei Pulverlacken ist dieser Prozeß mit der Filmbildung verbunden. Die Schmelzeviskosität der härtbaren Masse kann durch die erste(n) Teilreaktion(en) in Abhängigkeit von der Zusammensetzung des Reaktionssystemes angehoben werden, was insbesondere bei Beschichtungen und Verkapselungen von Vorteil ist, da somit ein Abfließen (z. B. Nasenbildung) der härtbaren Massen verhindert wird. Die Erhöhung der Schmelzeviskosität in dieser ersten Reaktionsstufe verhindert jedoch nicht ein weiteres Fließen was insbesondere bei Beschichtungen erwünscht ist, da hiermit die weitere Glättung des Filmes insbesondere bei hochreaktiven Pulverlacken zur Erzielung qualitativ hochwertiger Lackfilme gewährleistet ist.
In der zweiten oder in einer weiteren Reaktionsstufe, die zeitlich versetzt bei gleicher Temperatur wie die erste Stufe oder durch eine thermische Anregung bei höheren Temperaturen als die erste Reaktionsstufe oder photochemisch oder strahlenchemisch initiiert werden kann, erfolgt dann die Aushärtung durch vollständige Vernetzung der härtbaren Massen oder beispielsweise eines Lackes in einer Masse oder in einer Schicht oder durch/nach Kopplung an eine weitere Masse oder Schicht an der Oberfläche.
Die Teilreaktionen in katalysierten Zweistufen- oder Mehrstufenhärtungssystemen werden vorteilhafterweise thermisch und/oder photochemisch und/oder strahlenchemisch initiiert. Für letztere Varianten werden die Reaktionskomponenten entsprechend modifiziert, bzw. es kommen übliche Zusatzstoffe in üblichen Mengen, wie z.B. Initiatoren zum Einsatz.
Bei bevorzugt thermischer Initiierung der Stufenreaktion wird die Temperatur in einem Bereich von bevorzugt 20 K oberhalb Mischungstemperatur bis maximal 200 °C, linear und/oder nichtlinear angehoben. Bevorzugt sind Reaktionstemperaturen für die 2. Reaktionsstufe von ≤ 150°C. Bevorzugt wird ein Verfahren, bei dem die Temperatur stufenweise erhöht wird und die Temperatur nach jedem Erhöhungsschritt für eine bestimmte Zeitspanne konstant gehalten wird. Die Zeitspanne kann über analytische Untersuchungen (dynamische/isotherme DSC-Messungen) und/oder Simutationsprozesse für die erste Temperaturstufe bestimmt und optimiert werden, so dass parallel zum Übergang in den (schmelz-)flüssigen Zustand im wesentlichen die Reaktionen für eine Teilreaktion ablaufen. Im Verarbeitungsprozess der Massen werden bevorzugt 2 Temperaturstufen angewandt.
Die erfindungsgemäßen Katalysatoren und/oder Katalysatorgemische in den Zweistufen- oder Mehrstufenhärtungssystemen sind in der Lage Teilreaktionen zu trennen, die sich im unkatalysierten Reaktionssystem überlagern.
Außerdem können Katalysatorkombinationen eine Auftrennung von Teilreaktionen ermöglichen, die sich bei Verwendung der einzelnen Katalysatorkomponenten überlagern.
Die härtbaren Massen bestehen aus einer und/oder mehreren gleich und/oder verschieden funktionalisierten Polymerkomponenten mit mindesten zwei reaktiven funktionellen Gruppen im Molekül mit Molmassen gemäß den Ansprüchen und einem oder mehreren funktionalisierten niedermolekularen und/oder oligomeren Härtern, wobei bei einer oder mehreren gleich funktionalisierten Polymerkomponenten mindestens zwei Härter mit gleich und/oder unterschiedlich funktionalisierten Gruppen benötigt werden.
Über gezielte Auswahl der Polymerkomponenten bezüglich Verträglichkeit, Molmassenunterschiede, Reaktivitätsunterschiede sind hochglänzende bis matte bzw. strukturierte Beschichtungen in weiten Grenzen variierbar. Ein Überschuß einer weniger reaktiven Härterkomponente wirkt verlaufsfördernd durch Absenkung der Schmelzeviskosität.
Bevorzugte Polymerkomponenten, für das kombinierte Reaktionssystem 1 Epoxidgruppen/Hydroxylgruppen/Carboxylgruppen sind epoxy-, carboxyl- und/oder hydroxylfunktionalisierte Polymerverbindungen und Polyglycidylverbindungen (bevorzugt auf Bisphenol-A-Basis), und besonders bevorzugt Polyester (carboxyloder hydroxyl-funktionalisiert (aliphatische und/oder aromatische OH-Gruppen); mit Molmassen bevorzugt zwischen 400 - 4000 g/mol). Geeignete Härter sind mindestens difunktionell wie Epoxide (Triglycidylisocyanurat, Terephthalsäurediglycid, Trimellitsäuretriglycid, Trimesinsäuretriglycid, Pyromellitsäuretetraglycid, Bisphenol-A-diglycidether oder Oligomere aus Bisphenol-A-diglycidether oder deren Gemische), Bisphenol-A und/oder oligomere Verbindungen mit Bisphenol-A-Anteilen und phenolischen OH-Endgruppen, Phenolnovolac-Harze oder Oligomere mit aliphatischen OH-Endgruppen. Weitere Härter sind lineare oder verzweigte Verbindungen mit mindestens zwei Hydroxylgruppen oder Carboxylgruppen im Molekül. Erfindungsgemäß eingeschlossen sind Gemische aus mindestens zwei Härtern.

Bevorzugte Polymerkomponenten für das kombinierte Reaktionssystem 2 Epoxidgruppen/Carboxylgruppen und/oder Hydroxylgruppen/intern oder extern blockierte Isocyanatgruppen sind ebenfalls die unter Reaktionssystem 1 angegebenen Verbindungen ausgenommen Epoxid- und gegebenenfalls Hydroxylgruppen aufweisende Copolymerisate olefinisch ungesättigter Monomere. Zusätzlich werden in diesem Reaktionssystem erfindungsgemäß Härter mit mindestens zwei Uretdiongruppen oder mindestens einer Uretdiongruppe und mindestens einer freien oder extern blockierten Isocyanatgruppe im Molekül eingesetzt.

Als Katalysatoren sind aktive Substanzen und/oder deren Gemische geeignet, die schon für einstufige Vernetzungsreaktionen beschrieben wurden. Für das kombinierte Reaktionssystem 1 mit Epoxidgruppen/Hydroxylgruppen (bevorzugt arornatisch)/Carboxylgruppen sind z. B. folgende Katalysatoren geeignet: saure Katalysatoren wie z.B. Mineralsäuren und deren Salze, niedermolekulare organische Säuren (z.B. p-Toluensulfonsäure und deren Derivate) sowie Lewissäuren. Bevorzugt sind basische Katalysatoren, wie z.B. Alkalihalogenide, Alkaliverbindungen (z. B. KOH), quarternäre Ammonium- (z. B. Benzyltrimethylammoniumhydroxid, Benzyltrimethylammoniumchlorid, Tetramethylammoniumchlorid) oder Phosphoniumsalze (z. B. Tetraphenylphosphoniumbromid, Triphenylethylphosphoniumchlorid) oder deren Hydroxide, tertiäre Amine (z. B. Triethanolamin, N,N-Dimethylanilin), Imidazole (z. B. 2-Methylimidazol, Dimethylimidazol, 2-Ethyl-Methylimidazol), cyclische Amidine, Guanidine (unblockiert und/oder blockiert z. B. Acetyltetramethylguanidin), Zinnverbindungen (z. B. DBTL, Zinnoctoat, Zinnacetat), Chelate (z.B. Chromdiisopropylsalicylat) oder Gemische ausgewählter Katalysatoren (z.B. Gemische Thion/Amin, tertiäres Amin/Amidin, Zinnverbindungenlnucleophile Verbindungen). Als Katalysatoren für das Reaktionssystem 2 werden bevorzugt metallorganische Verbindungen und/oder deren Gemische (z. B. Dialkylzinnalkoholate, Dialkylzinncarboxylate oder Metallacetylacetonate oder deren Gemische mit Nucleophilen und/oder Katalysatoren für Additionsreaktionen oder weiterhin aus der Polyurethanchemie bekannten Verbindungen) eingesetzt.
Die Katalysatoren kommen in Anteilen von 0,01 bis 5 Gew.-% bezogen auf die Summe von Harz und Härter bevorzugt in Anteilen von 0,1 - 3 Gew.-% zum Einsatz. Die reaktiven Gruppen liegen vorzugsweise in äquivalenten Anteilen vor und/oder durch die Bildung neuer reaktiver Gruppen durch Teilreaktionen wird Gruppenäquivalenz eingestellt.
Besonders bei Verwendung der härtbaren Massen als Pulverlacke kommen weitere Zusatzstoffe, wie z.B. Verlaufsmittel, Entgasungsmittel, Pigmente, UV-Stabilisatoren, Lichtschutzmittel zum Einsatz. Für die Verwendung als Pulverlacke können durch die Einstellung der Reaktivitäten, und/oder durch Verwendung unterschiedlich verträglicher Komponenten und/oder durch die Wahl der Zusammensetzung (insbesondere Binderkomponenten) hochglänzende bis matte oder strukturierte Oberflächenqualitäten eingestellt werden.
Es sind hochreaktive thermisch härtbare Systeme herstellbar, bei denen die reaktiven Komponenten einschließlich Katalysatoren und gegebenenfalls verwendungsbedingt anderen Zusatzstoffen beispielsweise durch Schmelzeextrusion homogenisiert und anschließend zerkleinert und/oder pulverisiert werden und über eine ausreichend hohe Lagerstabilität verfügen.
Die Anwendung der Zweistufen- o. Mehrstufenhärtung zur Steuerung der Härtungsund Vernetzungsreaktion in thermoreaktiven Massen erfolgt vorzugsweise für Pulverlacke, Sinterpulver oder zur Verkapselung z.B. von integrierten Schaltkreisen.

Im weiteren wird die Erfindung an Ausführungsbeispielen näher erläutert.

### Beispiele

In einem Laborkneter (PL 2000 der Fa. Brabender) werden die Verbindungen (A) und (B) homogenisiert. Die Knetkammertemperatur wird so eingestellt, daß die Massetemperatur 100 °C nicht wesentlich überschreitet. Zu dieser Masse werden nacheinander die Verbindungen (C) und (E) gegeben. Zuletzt erfolgt die Dosierung des Katalysators oder Katalysatorgemisches (D) als Batch. Nach der Zugabe des Katalysators (D) wird die Homogenisierung nur solange fortgesetzt, bis eine beginnende Erhöhung der Schmelzeviskosität zu verzeichnen ist. Die Einwaagen der Komponenten werden so gewählt, daß die molaren Verhältnisse der reaktiven Gruppen Hydroxyl : Carboxyl : Epoxy = 1 : 1 : 2 betragen. Die Katalysatorkonzentration beträgt 0,01 mol/Epoxid-Equivalent. Die Zusammensetzungen der Beispielmischungen sind in Tabelle 1 angegeben. Die Eigenschaften der eingesetzten Komponenten sind in Tabelle 2 angegeben.
Nach Abschluß des Homogenisierungsprozesses werden die gemischten Massen durch Einbringen in flüssigen Stickstoff abgeschreckt.
Die abgeschreckten homogenisierten Massen werden in einer Labormühle unter Kühlung zerkleinert und bei 30 °C im Vakuum getrocknet. Die Charakterisierung der Proben erfolgt mittels Differential Scanning Calorimetrie (DSC). Die Temperaturen für die einzelnen Reaktionsstufen wurden an Hand dynamischer DSC-Messungen festgelegt. Die Ergebnisse der isothermen DSC-Messungen zur Stufenhärtung der Proben bis zur vollständigen Vernetzung und die daraus resultierenden Verarbeitungsbedingungen sind in Tabelle 3 angegeben.

Die pulverisierten härtbaren Massen werden auf ein Stahlblech appliziert und je nach Zusammensetzung stufenweise ausgehärtet (siehe Tabelle 3). Es werden trotz unterschiedlicher Substratdicke und unterschiedlicher Schichtdicken der härtbaren Massen verbesserte Produkteigenschaften insbesondere bezüglich Verlauf und Vernetzung erhalten.

**Tabelle 1:**

| Zusammensetzung der Beispielmischungen* | | | | | | | | | | | | |
|---|---|---|---|---|---|---|---|---|---|---|---|---|
| Komponenten/Beispiel | 1 | 2 | 3 | 4 | 5 | 6 | 7 | 8 | 9 | 10 | 11 ¹⁾ | 12 |
| (B) Hydroxylterminierter Polyester | 64,9 | 65,2 | 65,0 | 65,0 | 64,9 | 62,0 | 61,9 | 60,4 | 37,9 | 65,2 | - | 81,4 |
| (A) Carboxylterminierter Polyester | 24,0 | 24,1 | 24,0 | 24,2 | 24,1 | 22,9 | 22,8 | 22,3 | 11,7 | 24,1 | 69,4 | - |
| (C) Triglycidylisocyanurat | 10,4 | 10,5 | 10,5 | 10,5 | 10,5 | - | - | - | - | 10,6 | 18,1 | 12,7 |
| (C) Gemisch aus Terephthalsäurediglycidester und Trimellitsäuretriglycidester | - | - | - | - | - | 14,9 | 14,9 | | - | - | - | - |
| (C) Bisphenol-A-diglycidether | - | - | - | - | - | - | - | 16,8 | - | - | - | - |
| (C) Epoxyfunktionalisiertes Epoxidharz | - | - | - | - | - | - | - | - | 47,8 | - | - | - |
| (C) Bisphenol-A | - | - | - | - | - | - | - | - | - | - | 12,2 | - |
| (C) Adipinsäure | - | - | - | - | - | - | - | - | - | - | - | 5,7 |
| (D) Benzyltrimethylammoniumchlorid | 0,19 | 0,20 | - | 0.11 | - | 0,19 | - | - | - | - | 0,3 | 0,2 |
| (D) Tetraphenylphosphoniumbromid | - | - | 0,45 | - | 0,22 | | 0,42 | 0,42 | 0,26 | - | - | - |
| (D) Zinn(II)-bis-oktanoat | - | - | - | 0,21 | 0,21 | - | - | - | - | - | - | - |
| (D) 2-Methylimidazol | - | - | - | - | - | - | - | - | - | 0,09 | - | - |
| (E) Benzoin | 0,5 | | | | | | | | | | - | - |

| | | | | | | | | | | | | |
|---|---|---|---|---|---|---|---|---|---|---|---|---|
| * alle Angaben sind in Gew.-% | | | | | | | | | | | | |
| ¹) nicht erfindungsgemäß | | | | | | | | | | | | |

**Tabelle 2:**

| Eigenschaften der in den Beispielen eingesetzten Komponenten | | | | |
|---|---|---|---|---|
| Komponente | OH-Zahl | COOH-Zahl | Epoxid-Equivalent (EEW) | Tₘ bzw. T_{g} (°C) |
| Hydroxylterminierter Polyester | 44 | 17 | - | 64 |
| Carboxylterminierter Polyester | n. b. | 73,5 | - | 68 |
| Triglycidylisocyanurat | - | - | 99 | 98 |
| Gemisch aus Terephthalsäurediglycidester und Trimellisäuretriglycidester | - | - | 143 | 98 |
| Bisphenol-A-diglycidether | - | - | 170 | 41 |
| Epoxyfunktionalisiertes Epoxidharz | - | - | 748 | 101 |
| Bisphenol-A | 418 | - | - | 159 |
| Adipinsäure | - | 767 | - | 153 |
| n. b.: nicht ermittelt | | | | |

**Tabelle 3:**

| Verarbeitungsbedingungen für die Beispielmischungen aus isothermen DSC-Untersuchungen zur Stufenhärtung | | | | | | | | | | | | |
|---|---|---|---|---|---|---|---|---|---|---|---|---|
| Beispiel | 1 | 2 | 3 | 4 | 5 | 6 | 7 | 8 | 9 | 10 | 11 | 12 |
| Stufe 1/ | | | | | | | | | | | | |
| Reaktionstemperatur (°C) | 120 | 120 | 120 | 130 | 120 | 130 | 130 | 130 | 130 | 110 | 130 | 125 |
| Reaktionszeit (min) | 25 | 25 | 15 | 15 | 20 | 15 | 25 | 30 | 25 | 30 | 30 | 30 |

| Stufe 2/ | | | | | | | | | | | | |
|---|---|---|---|---|---|---|---|---|---|---|---|---|
| Reaktionstemperatur °C) | 150 | 150 | 140 | 150 | 150 | 150 | 160 | 150 | 150 | 140 | 150 | 145 |
| Reaktionszeit (min) | 25 | 25 | 30 | 30 | 25 | 30 | 30 | 30 | 25 | 30 | 30 | 30 |

## Patentansprüche

1. Härtbare Masse, enthaltend
- (A) eine oder mehrere mit mindestens zwei gleichen reaktiven Gruppen funktionalisierte Polymersubstanz(en)
und
- (B) eine oder mehrere mit mindestens zwei verschiedenen reaktiven Gruppen funktionalisierte Polymersubstanz(en)
oder
- (B) eine oder mehrere mit mindestens zwei verschiedenen reaktiven Gruppen funktionalisierte Polymersubstanz(en)
und **jeweils**
- (C) einen oder mehrere funktionalisierte(n) niedermolekulare(n) u./o. oligomere(n) Härter mit mindestens zwei reaktiven funktionellen Gruppen
und
- (D) mindestens einen Katalysator für Additionsreaktionen
und
- (E) weitere verwendungs- und verarbeitungsbedingte Additive, die zugegeben sein können,
wobei die reaktiven Gruppen im äquimolaren Verhältnis vorliegen und ausgenommen die härtbare Masse enthält als Komponente (A) und/oder (B) mindestens ein Epoxid- und gegebenenfalls Hydroxylgruppen aufweisendes Copolymerisat olefinisch ungesättigter Monomere.

2. Härtbare Masse nach Anspruch 1, bei der die Verbindung (A) aus mindestens einer hydroxylfunktionalisierten Verbindung mit einer OH-Zahl im Bereich von 20 - 200 mg KOH/g und/oder aus mindestens einer carboxylterminierten Verbindung mit einer Säurezahl von 20 - 150 mg KOH/g und die Verbindung (C) aus mindestens einer epoxyfunktionalisierten Verbindung mit einem EEW von 90 - 2000 besteht.

3. Härtbare Masse nach Anspruch 1, bei der die Verbindung (B) eine OH-Zahl im Bereich von 20 - 200 mg KOH/g und/oder über eine Säurezahl von 20 - 150 mg KOH/g und/oder ein EEW von 90 - 2000 aufweist.

4. Härtbare Masse nach Anspruch 1, bei der die Verbindungen (A) und/oder (B) aus Polymeren der Klassen Polyester und/oder Polyacrylat und/oder Polyether und/oder Epoxidharz und/oder Phenol-Formaldehydharz und/oder Formaldehyd-Harnstoffharz und/oder Melamin-Formaldehydharz und/oder Copolymeren dieser Klassen bestehen.

5. Härtbare Masse nach Anspruch 1, bei der die Verbindungen (A) oder (B) aus epoxyfunktionalisierten Polymeren bestehen, die Reaktionsprodukte aus Epihalogenhydrin und Bisphenol A und/oder Phenol-Formaldehyd sind.

6. Härtbare Masse nach Anspruch 1, bei der die Endgruppen und/oder Seitengruppen der Verbindungen (A) und/oder (B) aliphatische und/oder aromatische Hydroxylgruppen und/oder Carboxylgruppen sind.

7. Härtbare Masse nach Anspruch 1, bei der die Verbindung (C) aus mindestens einem Härter mit mindestens zwei Epoxygruppen pro Molekül und/oder einem Härter mit mindestens zwei Uretdiongruppen oder mindestens einer Uretdiongruppe und mindestens einer freien oder blockierten Isocyanatgruppe und/oder mit mindestens zwei extern blockierten oder freien Isocyanatgruppen und/oder mindestens zwei Carboxylgruppen und/oder mindestens zwei OH-Gruppen im Molekül besteht.

8. Härtbare Masse nach Anspruch 1, bei der die Verbindung (C) aus mindestens einer zweiwertigen linearen oder verzweigten, aliphatischen und/oder cycloaliphatischen und/oder arylaliphatischen und/oder aromatischen Hydroxylverbindungen und/oder mindestens einer zweiwertigen aliphatischen und/oder cycloaliphatischen und/oder arylaliphatischen und/oder aromatischen Carbonsäure besteht.

9. Härtbare Masse nach Anspruch 1, bei der ein carboxylfunktionalisierter Härter (C) aliphatische, alicyclische oder arylaliphatische Dicarbonsäuren oder deren Gemische sind, wobei die Kettenlänge n für die aliphatischen Dicarbonsäuren HOOC-(CH₂)ₙ-COOH bis 18 liegt.

10. Härtbare Masse nach Anspruch 1, bei ein OH-funktionalisierten Härter (C) cycloaliphatische oder aromatische Verbindungen mit mindestens zwei OH-Gruppen im Molekül oder deren Gemische sind.

11. Härtbare Masse nach Anspruch 1, bei der ein epoxyfunktionalisierten Härter (C) aliphatische, cyclische, cycloaliphatische, arylaliphatische oder aromatische Verbindungen mit mindestens zwei Glycidylgruppen im Molekül oder deren Gemische sind.

12. Härtbare Masse nach Anspruch 1, bei der ein uretdiongruppenhaltigen Härter (C) Polyadditionsprodukte aus uretdiongruppenhaltigen Isocyanaten mit niedermolekularen Diolen und endständigen OH, NCO oder reversibel oder irreversibel blockierten NCO-Gruppen sind.

13. Härtbare Masse nach Anspruch 12 bei der die Isocyanate aliphatische, cycloaliphatische, arylaliphatische oder aromatische Isocyanate mit mindestens zwei NCO-Gruppen im Molekül sind.

14. Härtbare Masse nach Anspruch 1, bei der die Summe der aliphatischenund/oder phenolischen OH-Gruppen und Carboxylgruppen im Verhältnis zu Epoxygruppen bei verzweigten und linearen Verbindungen zwischen 0,5 und 1,5 , vorzugsweise zwischen 0,8 und 1,2 , liegt.

15. Härtbare Masse nach Anspruch 1, bei der die Summe der vorliegenden und/oder sich aus der Reaktion zwischen Carboxyl- und Epoxygruppen bildenden aliphatischen Hydroxylgruppen und/oder phenolischen OH-Gruppen im Verhältnis zur Summe der Uretdiongruppen und/oder Isocyanatgruppen zwischen 0,1 und 1,2 liegt.

16. Härtbare Masse nach Anspruch 1, bei der die Verbindung (D) aus quarternären Phosphonium- oder quartemären Ammoniumverbindung(en) oder tertiären Phosphin(en) oder Zinn(II)verbindung(en) oder Metallacetylacetonate oder Imidazol(en) oder Aminverbindung(en) oder Amidinen oder Gemischen aus mindestens zwei Katalysatoren besteht.

17. Härtbare Masse nach Anspruch 1, bei der die Verbindungen (D) in Anteilen von 0,01 - 5 Gew.-%, vorzugsweise 0,1 - 3 Gew.-% bezogen auf die Summe der reaktiven Komponenten eingesetzt sind.

18. Härtbare Masse nach Anspruch 1, bei der als Verbindung (E) Entgasungsmittel, Verlaufshilfsmittel, Pigmente, Farbstoffe, Füllstoffe, UV-Stabilisatoren, Antioxydantien, Weichmacher, Hydrolyseschutzmittel, Lichtschutzmittel, UV- und/oder Elektronenstrahl-Härtungsinitiatoren eingesetzt sind.

19. Verfahren zur Herstellung von härtbaren Massen nach mindestens einem der Ansprüche 1 bis 18, bei dem als Ausgangsstoffe unvernetzte Massen, bestehend aus
- (A) einer oder mehreren mit mindestens zwei gleichen reaktiven Gruppen funktionalisierte(n) Polymersubstanz(en)
und
- (B) einer oder mehreren mit mindestens zwei verschiedenen reaktiven Gruppen funktionalisierte(n) Polymersubstanz(en)
oder
- (B) einer oder mehreren mit mindestens zwei verschiedenen reaktiven Gruppen funktionalisierte(n) Polymersubstanz(en)
und **jeweils**
- (C) einem oder mehreren funktionalisierten niedermolekularen und/oder oligomeren Härter(n) mit mindestens zwei reaktiven funktionellen Gruppen
und
- (D) mindestens einem Katalysator für Additionsreaktionen
und
- (E) weiteren verwendungs- und verarbeitungsbedingten Additiven, die zugegeben sein können,
eingesetzt werden, diese Ausgangsstoffe in Lösung und/oder in Schmelze homogenisiert werden, wobei die Homogenisierung höchstens solange durchgeführt wird, bis durch die beginnende Reaktion(en) eine erste deutliche Molmassenerhöhung während der Homogenisierung auftritt, danach die Lösung oder die Schmelze schnell unterhalb der Reaktionstemperatur der Masse abgekühlt wird und anschließend eine Lagerung der härtbaren Masse erfolgen kann

20. Verfahren nach Anspruch 19, bei dem die Zugabe des Katalysators oder Katalysatorgemisches als Batch nach der Homogenisierung der Komponenten A, B, C und E bei abgesenkten Temperaturen durchgeführt wird.

21. Verfahren nach Anspruch 19, bei dem die Homogenisierung der härtbaren Massen in Schmelze erfolgt.

22. Verfahren nach Anspruch 19, bei dem die Homogenisierung der härtbaren Massen ein- oder mehrstufig in Schmelze durchgeführt wird, wobei der Katalysator bei einstufiger Homogenisierung bei tieferen Temperaturen und bei mehrstufiger Homogenisierung erst in der zweiten Stufe bei tieferen Temperaturen zudosiert wird.

23. Verfahren nach Anspruch 19, bei dem die Homogenisierung der härtbaren Massen in Schmelze in einem Laborkneter oder einem Co-Kneter und/oder einem Extruder erfolgt.

24. Verfahren nach Anspruch 19, bei dem die Homogenisierung der härtbaren Massen in Schmelze bei Temperaturen zwischen 50°C und 110°C, bevorzugt zwischen 70 und 100°C erfolgt.

25. Verfahren nach Anspruch 19, bei dem die Homogenisierung der härtbaren Massen mindestens 1 min und längstens 15 min dauert.

26. Verfahren nach Anspruch 19, bei dem die Abkühlung unter die Reaktionstemperatur nach der Homogenisierung der härtbaren Massen durch Einbringen der Schmelze in flüssigen Stickstoff oder durch Aufbringen auf ein Kühlband erfolgt.

27. Verfahren nach Anspruch 19, bei dem die Homogenisierung der härtbaren Massen in Lösung erfolgt.

28. Verfahren nach Anspruch 19, bei dem mindestens eine der Komponenten (A) - (E), bevorzugt (A)-(C) in flüssiger Form vorliegt, in der mindestens eine der anderen Komponenten löslich ist.

29. Verfahren nach Anspruch 19, bei dem die Homogenisierung in einem externen Lösungsmittel erfolgt, das nach der Homogenisierung durch schonende Destillation im Vakuum oder durch Ausfällen in ein Nichtlösungsmittel für alle Komponenten A-E entfernt wird.

30. Verfahren nach den Ansprüchen 27 - 29, bei dem die Homogenisierungstemperatur oberhalb Raumtemperatur liegt und 110°C im wesentlichen nicht übersteigt.

31. Verfahren nach Anspruch 19, bei dem die Überführung in den (schmelz)flüssigen Zustand, Polymeraufbau- und Verzweigungsreaktionen und/oder die Aushärtungs- und Vernetzungsreaktion der erfindungsgemäßen Massen durch ein lineares und/oder nichtlineares Temperaturregime erfolgt.

32. Verfahren nach Anspruch 31, bei dem die Temperatur in einem Bereich von bevorzugt 20 K oberhalb der Mischungstemperatur bis maximal 200°C, vorzugsweise bis 150°C, linear und/oder nichtlinear angehoben wird.

33. Verfahren nach Anspruch 19, bei dem die Temperatur stufenweise erhöht wird und die Temperatur nach jedem Erhöhungsschritt für eine Zeitspanne von 1 bis 60 Minuten, vorteilhafterweise von 5 bis 30 Minuten, konstant gehalten wird.

34. Verfahren nach Anspruch 20, bei dem bei der Weiterverarbeitung die Temperatur in zwei Stufen erhöht wird und bei der ersten Stufe der Übergang in den (schmelz-) flüssigen Zustand parallel mit Reaktionen für die erste Teilreaktion realisiert wird, wobei über DSC-Messungen und Simulation des Reaktionsablaufes die Reaktionszeit für die erste Stufe optimiert wird, so dass bei dieser Temperatur im wesentlichen die erste Teilreaktion abläuft und in der direkt darauffolgenden Temperaturestufe oder zeitlich später bei 10 - 50 K erhöhter Temperatur die zweite Teilreaktion initiiert wird.

35. Verwendung von härtbaren Massen nach einem der Ansprüche 1 bis 18 und hergestellt nach einem der Ansprüche 19 bis 34, für die Herstellung von thermisch gehärteten Massen, bei denen bei der Weiterverarbeitung nach der Lagerung oder anschließend an die Abkühlung der härtbaren Massen die Temperatur zur Realisierung der vollständigen Vernetzung solange linear und/oder nichtlinear oder stufenweise erhöht und die erhöhte Temperatur konstant gehalten wird, bis über DSC-Messungen im wesentlichen keine Reaktionswärme mehr nachweisbar ist.

## Claims

1. Curable composition comprising
- (A) one or more polymer substances functionalized with at least two identical reactive groups
and
- (B) one or more polymer substances functionalized with at least two different reactive groups
or
- (B) one or more polymer substances functionalized with at least two different reactive groups
and in each case
- (C) one or more functionalized low molecular mass and/or oligomeric curing agents having at least two reactive functional groups
and
- (D) at least one catalyst for addition reactions
and
- (E) further use-related and processing-related additives which can be added,
the reactive groups being present in an equimolar ratio and with the exception of the curable composition comprising as component (A) and/or (B) at least one addition polymer of olefinically unsaturated monomers which contains epoxide groups and optionally hydroxyl groups.

2. Curable composition according to Claim 1, wherein the compound (A) is composed of at least one hydroxyl-functionalized compound having an OH number in the range of 20 - 200 mg KOH/g and/or of at least one carboxyl-terminated compound having an acid number of 20 - 150 mg KOH/g and the compound (C) is composed of at least one epoxy-functionalized compound having an EEW of 90 - 2000.

3. Curable composition according to Claim 1, wherein the compound (B) has an OH number in the range of 20 - 200 mg KOH/g and/or an acid number of 20 - 150 mg KOH/g and/or an EEW of 90 - 2000.

4. Curable composition according to Claim 1, wherein the compounds (A) and/or (B) are composed of polymers from the classes of polyester and/or polyacrylate and/or polyether and/or epoxide resin and/or phenol-formaldehyde resin and/or ureaformaldehyde resin and/or melamine-formaldehyde resin and/or copolymers of these classes.

5. Curable composition according to Claim 1, wherein the compounds (A) or (B) are composed of epoxy-functionalized polymers which are reaction products of epihalohydrin and bisphenol A and/or phenol-formaldehyde.

6. Curable composition according to Claim 1, wherein the end groups and/or side groups of the compounds (A) and/or (B) are aliphatic and/or aromatic hydroxyl groups and/or carboxyl groups.

7. Curable composition according to Claim 1, wherein the compound (C) is composed of at least one curing agent having at least two epoxy groups per molecule and/or one curing agent having at least two uretdion groups or at least one uretdion group and at least one free or blocked isocyanate group and/or having at least two externally blocked or free isocyanate groups and/or at least two carboxyl groups and/or at least two OH groups in the molecule.

8. Curable composition according to Claim 1, wherein the compound (C) is composed of at least one difunctional linear or branched, aliphatic and/or cycloaliphatic and/or arylaliphatic and/or aromatic hydroxy compound and/or at least one difunctional aliphatic and/or cycloaliphatic and/or aryl aliphatic and/or aromatic carboxylic acid.

9. Curable composition according to Claim 1, wherein a carboxyl-functionalized curing agent (C) comprises aliphatic, alicyclic or arylaliphatic dicarboxylic acids or mixtures thereof, the chain length n for the aliphatic dicarboxylic acids HOOC-(CH₂)ₙ-COOH is up to 18.

10. Curable composition according to Claim 1, wherein an OH-functionalized curing agent (C) comprises cycloaliphatic or aromatic compounds having at least two OH groups in the molecule or mixtures thereof.

11. Curable composition according to Claim 1, wherein an epoxy-functionalized curing agent (C) comprises aliphatic, cyclic, cycloaliphatic, arylaliphatic or aromatic compounds having at least two glycidyl groups in the molecule or mixtures thereof.

12. Curable composition according to Claim 1, wherein a curing agent (C) containing uretdione groups comprises polyaddition products formed from isocyanates containing uretdione groups with low molecular mass diols and terminal OH, NCO or reversibly or irreversibly blocked NCO groups.

13. Curable composition according to Claim 12, wherein the isocyanates are aliphatic, cycloaliphatic, arylaliphatic or aromatic isocyanates having at least two NCO groups in the molecule.

14. Curable composition according to Claim 1, wherein the sum of the aliphatic and/or phenolic OH groups and carboxyl groups in relation to epoxy groups in the case of branched and linear compounds is between 0.5 and 1.5, preferably between 0.8 and 1.2.

15. Curable composition according to Claim 1, wherein the sum of the aliphatic hydroxyl groups and/or phenolic OH groups present and/or formed from the reaction between carboxyl groups and epoxy groups, in relation to the sum of the uretdione groups and/or isocyanate groups, is between 0.1 and 1.2.

16. Curable composition according to Claim 1, wherein the compound (D) is composed of quaternary phosphonium compound(s) or quaternary ammonium compound(s) or tertiary phosphine(s) or tin(II) compound(s) or metal acetylacetonates or imidazole(s) or amine compound(s) or amidines or mixtures of at least two catalysts.

17. Curable composition according to Claim 1, wherein the compounds (D) are used in fractions of 0.01 - 5% by weight, preferably 0.1 - 3% by weight, based on the sum of the reactive components.

18. Curable composition according to Claim 1, wherein as compound (E) use is made of devolatilizers, levelling assistants, pigments, dyes, fillers, UV stabilizers, antioxidants, plasticizers, hydrolysis preventatives, light stabilizers, UV-curing initiators and/or electron beam curing initiators.

19. Process for preparing curable compositions according to at least one of Claims 1 to 18, in which starting materials used comprise uncrosslinked compositions composed of
- (A) one or more polymer substances functionalized with at least two identical reactive groups
and
- (B) one or more polymer substances functionalized with at least two different reactive groups
or
- (B) one or more polymer substances functionalized with at least two different reactive groups
and in each case
- (C) one or more functionalized low molecular mass and/or oligomeric curing agents having at least two reactive functional groups
and
- (D) at least one catalyst for addition reactions
and
- (E) further use-related and processing-related additives which can be added,
these starting materials being homogenized in solution and/or in the melt, the homogenization being conducted at the longest until as a result of the commencing reaction(s) a first distinct increase in molar mass occurs during the homogenization, thereafter the solution or the melt being cooled rapidly below the reaction temperature of the composition, and it being possible subsequently to store the curable composition.

20. Process according to Claim 19, wherein the addition of the catalyst or catalyst mixture is made as a batch following the homogenization of components A, B, C and E at reduced temperatures.

21. Process according to Claim 19, wherein the homogenization of the curable compositions takes place in the melt.

22. Process according to Claim 19, wherein the homogenization of the curable compositions is carried out in one or more stages in the melt, the catalyst being metered in at relatively low temperatures in the case of one-stage homogenization and at relatively low temperatures only in the second stage in the case of multistage homogenization.

23. Process according to Claim 19, wherein the homogenization of the curable compositions takes place in the melt in a laboratory kneading apparatus or in a co-kneader and/or in an extruder.

24. Process according to Claim 19, wherein the homogenization of the curable compositions takes place in the melt at temperatures between 50°C and 110°C, preferably between 70 and 100°C.

25. Process according to Claim 19, wherein the homogenization of the curable compositions lasts for at least 1 minute and at most 15 minutes.

26. Process according to Claim 19, wherein the cooling below the reaction temperature following the homogenization of the curable compositions takes place by introduction of the melt into liquid nitrogen or by application to a cooling belt.

27. Process according to Claim 19, wherein the homogenization of the curable compositions takes place in solution.

28. Process according to Claim 19, wherein at least one of components (A) - (E), preferably (A) - (C), is present in a liquid form in which at least one of the other components is soluble.

29. Process according to Claim 19, wherein the homogenization takes places in an external solvent which, following the homogenization, is removed by gentle distillation under reduced pressure or by precipitation from a non-solvent for all components A- E.

30. Process according to Claims 27 - 29, wherein the homogenization temperature is above room temperature and essentially does not exceed 110°C.

31. Process according to Claim 19, wherein conversion into the liquid (melt) state, polymer build-up reactions and branching reactions and/or the curing reaction and the crosslinking reaction of the compositions of the invention takes place by means of a linear and/or non-linear temperature regime.

32. Process according to Claim 31, wherein the temperature is raised linearly and/or non-linearly in a range from preferably 20 K above the mixing temperature to a maximum of 200°C, preferably to 150°C.

33. Process according to Claim 19, wherein the temperature is raised in stages and after each step of increase the temperature is held constant for a period of from 1 to 60 minutes, advantageously from 5 to 30 minutes.

34. Process according to Claim 20, wherein the temperature is raised in two stages in the course of further processing and in the first stage the transition to the liquid (melt) state is realized in parallel with reactions for the first part-reaction, the reaction time for the first stage being optimized by way of DSC measurements and simulation of the course of the reaction, so that at this temperature essentially the first part-reaction takes place and in the immediately following temperature stage or at a later point in time, at a temperature increased by 10 - 50 K, the second part-reaction is initiated.

35. Use of curable compositions according to one of Claims 1 to 18 and prepared according to one of Claims 19 to 34 for producing thermally cured compositions in which, in the course of further processing, following storage or subsequent to the cooling of the curable compositions, the temperature is raised linearly and/or non-linearly or in stages, and the increased temperature is held constant, until heat of reaction is essentially no longer detectable by way of DSC measurements, for the purpose of realizing complete crosslinking.

## Revendications

1. Masse durcissable, contenant
- (A) une ou plusieurs substances polymères fonctionnalisées ayant au moins deux groupements réactifs identiques
et
- (B) une ou plusieurs substances polymères fonctionnalisées ayant au moins deux groupements réactifs différents
ou
- (B) une ou plusieurs substances polymères fonctionnalisées ayant au moins deux groupements réactifs différents
et, à chaque fois,
- (C) un ou plusieurs agents de durcissement fonctionnalisés, à faible poids moléculaire et/ou oligomères, ayant au moins deux groupements fonctionnels réactifs
et
- (D) au moins un catalyseur pour des réactions d'addition
et
- (E) des additifs supplémentaires, conditionnés par l'application et la mise en oeuvre, qui peuvent être ajoutés,
les groupements réactifs étant présents dans un rapport équimolaire et à l'exception de ce que la masse durcissable contient, en tant que composant (A) et/ou (B), au moins un copolymère de monomères oléfiniquement insaturés, présentant des groupements époxydes et, le cas échéant, des groupements hydroxyles.

2. Masse durcissable selon la revendication 1, dans le cas de laquelle le composé (A) se compose au moins d'un composé fonctionnalisé hydroxyle, ayant un indice OH dans le domaine de 20 - 200 mg de KOH/g et/ou au moins d'un composé à terminaison carboxyle ayant un indice d'acidité de 20 - 150 mg de KOH/g et le composé (C) se compose au moins d'un composé fonctionnalisé époxyde avec une valeur EEW de 90 - 2000.

3. Masse durcissable selon la revendication 1, dans le cas de laquelle le composé (B) présente un indice OH dans le domaine de 20 - 200 mg de KOH/g et/ou un indice d'acidité de 20 - 150 mg de KOH/g et/ou une valeur EEW de 90 - 2000.

4. Masse durcissable selon la revendication 1, dans le cas de laquelle les composés (A) et/ou (B) se composent de polymères des classes polyester et/ou polyacrylate et/ou polyéther et/ou résine époxyde et/ou résine phénol-formaldéhyde et/ou formaldéhyde/résine d'urée et/ou résine de mélamine/formaldéhyde et/ou de copolymères de ces classes.

5. Masse durcissable selon la revendication 1, dans le cas de laquelle les composés (A) ou (B) se composent de polymères fonctionnalisés époxyde, qui sont les produits de réaction d'une épihalogénohydrine et du bisphénol A et/ou du phénol-formaldéhyde.

6. Masse durcissable selon la revendication 1, dans le cas de laquelle les groupements terminaux et/ou les groupements latéraux des composés (A) et/ou (B) sont des groupements hydroxyles et/ou des groupements carboxyles aliphatiques et/ou aromatiques.

7. Masse durcissable selon la revendication 1, dans le cas de laquelle le composé (C) se compose d'au moins un agent de durcissement, ayant au moins deux groupements époxy par molécule et/ou d'un agent de durcissement ayant au moins deux groupements uretdione ou au moins un groupement uretdione et au moins un groupement isocyanate libre ou bloqué et/ou au moins deux groupements isocyanates bloqués extérieurement ou libres et/ou au moins deux groupements carboxyles et/ou au moins deux groupements OH dans la molécule.

8. Masse durcissable selon la revendication 1, dans le cas de laquelle le composé (C) se compose d'au moins un composé hydroxyle divalent linéaire ou ramifié, aliphatique et/ou cycloaliphatique et/ou arylaliphatique et/ou aromatique et/ou d'au moins un acide carboxylique divalent aliphatique et/ou cycloaliphatique et/ou arylaliphatique et/ou aromatique.

9. Masse durcissable selon la revendication 1, dans le cas de laquelle un agent de durcissement fonctionnalisé carboxyle (C) sont des acides dicarboxyliques aliphatiques, alicycliques ou arylaliphatiques ou leurs mélanges, la longueur de chaîne n pour les acides dicarboxyliques aliphatiques HOOC-(CH₂)ₙ-COOH se situant à 18.

10. Masse durcissable selon la revendication 1, dans le cas de laquelle un agent de durcissement fonctionnalisé OH (C) sont des composés cycloaliphatiques ou aromatiques, ayant au moins deux groupements OH dans la molécule, ou leurs mélanges.

11. Masse durcissable selon la revendication 1, dans le cas de laquelle un agent de durcissement fonctionnalisé époxy (C) sont des composés aliphatiques, cycliques, cycloaliphatiques, arylaliphatiques ou aromatiques, ayant au moins deux groupements glycidyles dans la molécule, ou leurs mélanges.

12. Masse durcissable selon la revendication 1, dans le cas de laquelle un agent de durcissement fonctionnalisé uretdione (C) sont des produits de polyaddition faits à partir d'isocyanates contenant des groupements uretdione avec des diols à poids moléculaire faible et des groupements terminaux OH, NCO ou des groupements NCO bloqués de manière réversible ou de manière irréversible.

13. Masse durcissable selon la revendication 12, dans le cas de laquelle les isocyanates sont des isocyanates aliphatiques, cycloaliphatiques, arylaliphatiques ou aromatiques, ayant au moins deux groupements NCO dans la molécule.

14. Masse durcissable selon la revendication 1, dans le cas de laquelle la somme des groupements OH aliphatiques et/ou phénoliques et des groupements carboxyles par rapport aux groupements époxyde dans le cas de composés ramifiés et linéaires se situe entre 0,5 et 1,5, de préférence, entre 0,8 et 1,2.

15. Masse durcissable selon la revendication 1, dans le cas de laquelle la somme des groupements hydroxyles aliphatiques, se formant lors de réaction entre les groupements carboxyles et les groupements époxydes et/ou les groupements OH phénoliques dans le rapport à la somme des groupements uretdione et/ou des groupements isocyanates se situe entre 0,1 et 1,2.

16. Masse durcissable selon la revendication 1, dans le cas de laquelle le composé (D) se compose d'un ou de composés de phosphonium quaternaires ou de composés d'ammonium quaternaires ou de phosphines tertiaires ou de composés du zinc (II) ou d'acétylacétonates de métaux ou d'imidazoles ou de composés d'amine ou d'amidines ou de mélanges d'au moins deux catalyseurs.

17. Masse durcissable selon la revendication 1, dans le cas de laquelle les composés (D) sont utilisés dans des proportions de 0,01 - 5 % en poids, de préférence, de 0,1 - 3% en poids par rapport à la somme des composants réactifs.

18. Masse durcissable selon la revendication 1, dans le cas de laquelle l'on utilise, en tant que composant (E), des agents de dégazage, de agents nivelants, des pigments, des colorants, des charges, des agents de stabilisation par rapport aux rayons UV, des agents antioxydants, des plastifiants, des agents de protection contre l'hydrolyse, des agents de protection contre la lumière, des agents initiateurs du durcissement sous l'effet de la lumière UV ou d'un faisceau électronique.

19. Procédé en vue de la fabrication de masses durcissables conformément à au moins une des revendications 1 à 18, lors duquel l'on utilise, en tant que substances de départ, des masses non réticulées se composant
- (A) d'une ou de plusieurs substances polymères fonctionnalisées ayant au moins deux groupements réactifs identiques
et
- (B) d'une ou de plusieurs substances polymères fonctionnalisées ayant au moins deux groupements réactifs différents
ou
- (B) d'une ou de plusieurs substances polymères fonctionnalisées ayant au moins deux groupements réactifs différents
et, à chaque fois,
- (C) d'un un ou de plusieurs agents de durcissement fonctionnalisés, à faible poids moléculaire et/ou oligomères, ayant au moins deux groupements fonctionnels réactifs
et
- (D) d'au moins un catalyseur pour des réactions d'addition
et
- (E) d'additifs supplémentaires, conditionnés par l'application et la mise en oeuvre, qui peuvent être ajoutés, ces substances de départ étant homogénéisés en solution et/ou dans la masse en fusion, l'homogénéisation étant poursuivie tant que, grâce à la ou aux réactions qui débutent, il se produit, pendant l'homogénéisation, une première augmentation nette de masse, la solution ou la masse en fusion étant alors rapidement refroidie en dessous de la température de réaction de la masse et un stockage de la masse durcissable pouvant se faire par la suite.

20. Procédé selon la revendication 19, lors duquel l'addition du catalyseur ou du mélange de catalyseurs est effectuée à une température abaissée, en mode discontinu, après l'homogénéisation des composants A, B, C et E.

21. Procédé selon la revendication 19, lors duquel l'homogénéisation des masses durcissables a lieu dans la masse en fusion.

22. Procédé selon la revendication 19, lors duquel l'homogénéisation des masses durcissables est effectuée en une ou plusieurs étapes dans la masse fondue, le catalyseur étant ajouté par dosage à basses températures en cas d'homogénéisation à une étape ou n'étant ajouté par dosage à basses températures qu'après la deuxième étape, en cas d'homogénéisation à plusieurs étapes.

23. Procédé selon la revendication 19, lors duquel l'homogénéisation des masses durcissables se fait dans la masse en fusion dans un pétrisseur de laboratoire ou dans un co-pétrisseur et/ou dans une extrudeuse.

24. Procédé selon la revendication 19, lors duquel l'homogénéisation des masses durcissables se fait dans la masse en fusion à des températures comprises entre 50°C et 110°C, de préférence, entre 70 et 100°C.

25. Procédé selon la revendication 19, lors duquel l'homogénéisation des masses durcissables dure au moins 1 minute et, au plus, 15 minutes.

26. Procédé selon la revendication 19, lors duquel le refroidissement en dessous de la température de réaction après l'homogénéisation des masses durcissables se fait par introduction de la masse en fusion dans de l'azote liquide ou par application sur une bande de refroidissement.

27. Procédé selon la revendication 19, lors duquel l'homogénéisation des masses durcissables se fait en solution.

28. Procédé selon la revendication 19, lors duquel au moins un des composants (A) - (E), de préférence, (A) - (C), est présent sous la forme d'un liquide dans lequel au moins l'un des autres composants est soluble.

29. Procédé selon la revendication 19, lors duquel l'homogénéisation se fait dans un solvant externe qui est éliminé après l'homogénéisation à l'aide d'une distillation ménagée sous vide ou à l'aide d'une précipitation dans un agent non solvant pour tous les composants A-E.

30. Procédé selon la revendications 27 - 29, lors duquel la température d'homogénéisation se situe au-dessus de la température ambiante et ne dépasse pas substantiellement 110°C.

31. Procédé selon la revendication 19, lors duquel la conversion à l'état de liquide (en fusion), les réactions de polymérisation et de ramification et/ou les réactions de durcissement et de réticulation des masses selon l'invention se font par l'intermédiaire d'un régime de température linéaire et/ou non linéaire.

32. Procédé selon la revendication 31, lors duquel la température est augmentée d'une manière linéaire et/ou d'une manière non linéaire dans un domaine, de préférence, de 20 K au-dessus de la température de mélange jusqu'à, au maximum, 200°C, de préférence, jusqu'à 150°C.

33. Procédé selon la revendication 19, lors duquel la température est augmentée par étapes et lors duquel la température est maintenue constante, après chaque étape d'augmentation, pendant un intervalle de temps de 1 à 60 minutes, de préférence, de 5 à 30 minutes.

34. Procédé selon la revendication 20, lors duquel, au cours de la mise en oeuvre ultérieure, la température est augmentée en deux étapes et lors duquel, au cours de la première étape, la conversion dans l'état de liquide (en fusion) est réalisée en parallèle avec les réactions pour la première réaction partielle, le temps de réaction pour la première étape étant optimalisé par l'intermédiaire de mesures DSC et d'une simulation du déroulement de la réaction, de telle sorte qu'à cette température il y ait, pour l'essentiel, un déroulement de la première réaction partielle et que, dans l'étape de température suivant, directement ou après un délai temporaire à une température augmentée de 10 - 50 K, il y ait une initiation de la deuxième réaction partielle.

35. Utilisation des masses durcissables selon l'une quelconque des revendications 1 à 18 et fabriquées selon l'une quelconque des revendications 19 à 34, en vue de la fabrication de masses durcies par voie thermique, pour lesquelles, lors de la mise en oeuvre ultérieure, après le stockage ou à la suite du refroidissement des masses durcissables, la température en vue de la réticulation complète est augmentée linéairement et/ou non linéairement ou par étapes et pour lesquelles la température augmentée est maintenue constante, jusqu'à ce qu'aucune chaleur de réaction ne soit plus, pour l'essentiel, détectable par l'intermédiaire de mesures DSC.
